Europäisches Patentamt

(19) European Patent Office

Office européen des brevets

(11) Publication number: **0 095 011**
A2

# (12) EUROPEAN PATENT APPLICATION

(21) Application number: 83100298.5

(22) Date of filing: 14.01.83

(51) Int. Cl.³: **C 10 J 3/56**

(30) Priority: 24.05.82 US 381093

(43) Date of publication of application:
30.11.83 Bulletin 83/48

(84) Designated Contracting States:
BE DE FR GB IT

(71) Applicant: WESTINGHOUSE ELECTRIC CORPORATION
Westinghouse Building Gateway Center
Pittsburgh Pennsylvania 15222(US)

(72) Inventor: Chelen, Eugene J.
Stonehouse Road, RD 2, Box 99
New Alexandria Pennsylvania(US)

(72) Inventor: Bogner, Alan E.
35 Amherst Avenue
Pittsburgh Pennsylvania(US)

(72) Inventor: Lucas, Jimmie L.
164 Striker Road
Freeport Pennsylvania(US)

(74) Representative: Fleuchaus, Leo, Dipl.-Ing. et al,
Fleuchaus & Wehser Melchiorstrasse 42
D-8000 München 71(DE)

(54) Carryover barrier for gasification system.

(57) In a carbonaceous material fluidized bed gasifier, wherein a baffle (30) is disposed within the gasifier vessel (22) for reducing carryover of entrained particles from the vessel into the product gas system, the baffle (30) is fluid cooled by an externally supplied fluid to reduce deposition of the entrained particles on the baffle surface (40).

FIG. I

EP 0 095 011 A2

1

# CARRYOVER BARRIER FOR GASIFICATION SYSTEM

This invention relates to gasification of carbonaceous materials, and more particularly to apparatus for reducing carry-over from the gasification vessel of entrained particles in the product gas of fluidized bed gasification reactors.

In reactors for the gasification of carbonaceous materials, such as coal, a combustible product gas is produced, as well as solid waste products such as agglomerated ash. In the Process Development Unit (PDU) fluidized bed gasification reactor being operated for the United States Government, particulate coal is injected through one of a number of concentric tubes extending upwardly into the center of a vertical bed-containing pressure vessel. Fluidization occurs in the upper sections.

In a fluidized bed gasification reactor, the product gas from gasified coal contains a significant amount of entrained particles, a large percentage of which are molten at the gasifier exit temperatures of between 930°C and 1040°C, typically approximately 980°C. These particles, which are of varying chemical composition, will stick both to metallic and non-metallic surfaces regardless of the angle of incidence of the gas flow to the surface, as the gas flows from the gasifier exit. It has been demonstrated that flow passages will eventually plug almost closed with solidified material, and the efficiency of the system will fall correspondingly.

Any solution that would reduce the carryover of entrained particles would be of significant value. At times, particle quantities on the order of 350 kg per hour have been seen in the product gas of the PDU, which is rated at approximately 1100 kg of coal input per hour. Reducing the carryover would have at least two beneficial effects. First it would reduce the gas clean-up requirements. Second, it would increase the amount of time the particles would remain within the hot gasifier vessel. This would result in increased gasification of the particles, and thus a more efficient system.

Merely placing a barrier in the gasifier vessel would be insufficient, due to the sticking quality of the particles. Present information in technical papers and from experimental data obtained from PDU operations indicate that deposition of these molten particles will be reduced if either of the two following conditions are maintained:

(a) The gas temperature does not exceed 705°C.

(b) The surfaces through which the gas passes or on which it is allowed to impact are metallic and are maintained at less than 260°C at the gas/metal interface.

Both of these conditions are difficult to achieve in a practical manner within the gasifier vessel while maintaining an operating temperature between 930°C and 1040°C.

It is therefore the principal object of the present invention to provide gasifier systems with apparatus which will reduce entrained particle carryover from the gasifier vessel without excessive particle deposition.

With this object in view, the present invention resides in a fluidized bed apparatus for gasifying carbonaceous material, said apparatus comprising a vessel, having an ash collecting area at its lower end, a fluidized bed section above said ash collecting area and a gas section at its top end, characterized in that at least one baffle extends into said gas section for deflecting said gas and reflecting particulate materials in said gas, said baffles being cooled by a fluid to prevent said particulate material from adhering to said baffle.

The invention will become more readily apparent from the following description of a preferred embodiment thereof shown, by way of example only, in the accompanying drawing in which:

Figure 1 is a cross-sectional view of a gasifier vessel in accordance with the invention; and

Fig. 2 is a plan view taken along the line II-II of Fig. 1.

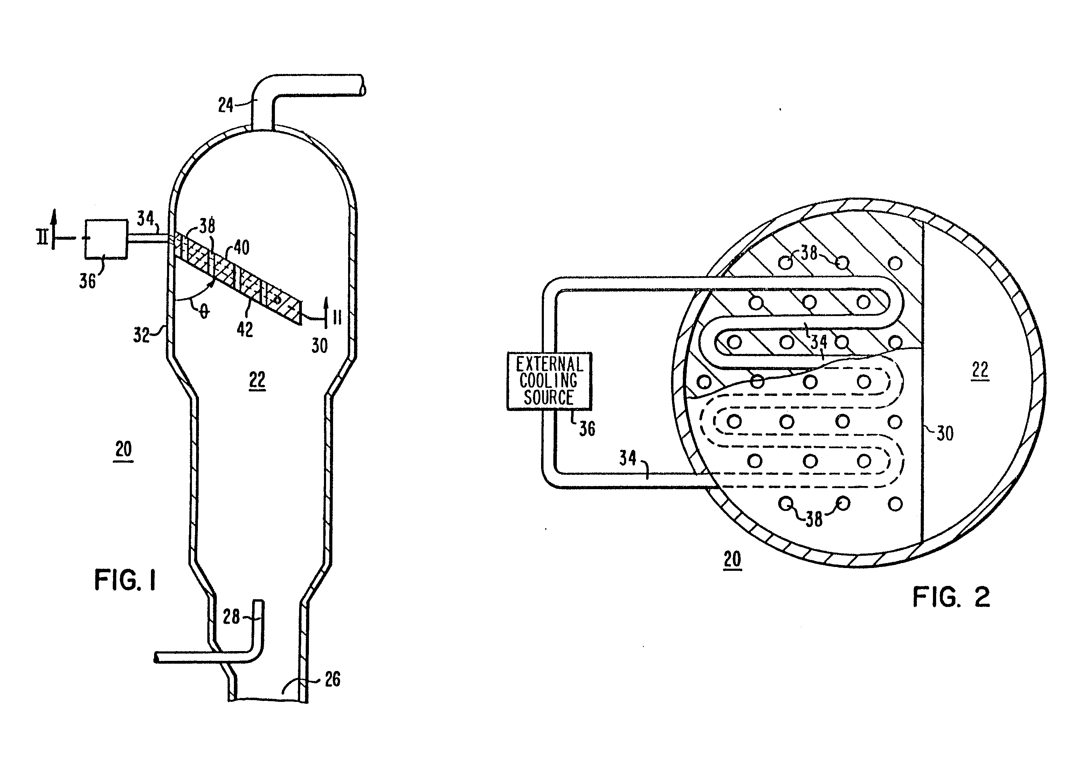

Referring now to Figs. 1 and 2, there is shown a carbonaceous material gasifier 20 in accordance with the invention. The gasifier comprises a vessel 22, a product gas outlet 24 penetrating the top of the vessel 22, an ash discharge outlet 26 penetrating the bottom of the vessel 22, an input material nozzle 28 disposed through the bottom of the vessel 22 and extending upwardly into the vessel 22 and a baffle 30 attached to a vessel wall 32 and disposed within the vessel 22 above the nozzle 28. The baffle 30 is typically disposed from the vessel wall 32 towards the center of the vessel 22 and may cover either a large or small percentage of the cross-sectional area of the vessel 22. Typically, the baffle will be disposed downwardly by an angle θ between the vessel wall 32 and the plane of the baffle 30. The angle θ will typically be between 30° and 60°. Disposed within the baffle 30 is a cooling means 34. Typically, this cooling means 34 will be an embedded pipe or a conduit molded within the baffle 30. The cooling means 34 extends through the vessel wall 32 to an external cooling source 36. The baffle 30 also comprises a plurality of holes 38 disposed through the baffle 30 from an upper surface 40 to a lower surface 42 of the baffle 30. The baffle 30 typically will be made of metal or cast refractory ceramic but may also be of any other heat resistant material. The baffle may be attached by any conventional means such as welding or bolting, or may be supported by the cooling means. A plurality of identical baffles 30 may also be utilized.

The baffle 30 performs in operation as follows. Input material, such as a mixture of steam, particulated coal, air or oxygen and process gas is injected into the vessel 22 through the nozzle 28. The process gas may be any combustible gas and is typically product gas from the gasifier 20 which has been previously cleaned for general use. The combined action of the steam, air or oxygen, process gas and particulated coal results in fluidization of the particulated coal, forming a fluidized bed. As the coal becomes gasified, part of the product is ash which is composed largely of non-carbon materials and tends to stick together, or agglomerate. This ash falls to the bottom of the vessel 22 and then out through the ash discharge 26. The particulated coal contains a large amount of carbon which gradually becomes gasified and passes out through the product gas outlet 24. In so doing, some amount of small coal particles becomes entrained in the product gas. These entrained particles rise above the fluidized bed and would tend to pass out the product gas outlet 24 were it not for the presence of the baffle 30. As the entrained particles contact the baffle 30, they are deflected downward back into the fluidized bed. As a result, they are retained within the bed and have the opportunity for further gasification. Some entrained particles will go past the baffle 30, however, and either pass through the product gas outlet 24 or be deflected downward by the vessel. Those particles which are deflected downward by the vessel may land on the upper surface 40 of the baffle 30. The holes 38 in the baffle 30 allow gas to pass through the baffle 30 which tends to fluidize these particles and causes them to roll or float down the upper surface 40 of the baffle 30 into the fluidized bed rather than build up on the upper surface 40 of the baffle 30.

009501 1

A large percentage of the entrained particles are molten as a result of the operating temperature of the gasifier 20. These particles have a tendency to stick to or deposit on surfaces which they come in contact with. However, since the baffle 30 is cooled, typically to a temperature between 400° and 800°F, the particle sticking or deposition is greatly reduced. The particles that would have stuck or deposited on the baffle 30, in returning to the fluidized bed, are subjected to additional gasification, thus improving the gasifier 20 efficiency.

The invention disclosed herein was made or conceived in the course of, or under, a contract with the United States Government identified as No. DE-AC01-80-ET-14752.

6

CLAIMS:

1. An fluidized bed apparatus for gasifying carbonaceous material, said apparatus comprising a vessel (22), having an ash collecting area (26) at its lower end, a fluidized bed section above said ash collecting area and a gas section at its top end, characterized in that at least one baffle (30) extends into said gas section for deflecting said gas and reflecting particulate materials in said gas, said baffles (30) being cooled by a fluid to prevent said particulate material from adhering to said baffle (30).

2. An apparatus as claimed in claim 1, characterized in that cooling coils (34) are embedded in said baffle (30) for conducting said cooling fluid therethrough.

3. An apparatus as claimed in claim 1 or 2, characterized in that said baffle is attached to said vessel and extends downwardly from the vessel wall to the interior of said vessel (22).

4. An apparatus claimed in claim 3, characterized in that said baffle (30) is extends downwardly from the vessel wall by an angle of between 30° and 60° from a vertical reference.

5. An apparatus as claimed in any of claims 1 to 4, characterized in that said baffle has a number of holes (38) extending therethrough to prevent collection of particulate material on its upper surface (40).

6. An apparatus as claimed in any of claims 1to 5, characterized in that said baffle (30) comprises a refractory ceramic material.

FIG. 1

20

24

34

38
40
42
36
32
θ
22
30
28
26

FIG. 2

20

22

30

34

38

34

38

EXTERNAL
COOLING
SOURCE

36

1/1

0095011